# EUROPEAN PATENT SPECIFICATION

(11) **EP 1 926 386 B1**
(45) Date of publication and mention of the grant of the patent: **26.05.2010**
(21) Application number: 06776957.0
(22) Date of filing: 17.08.2006
(51) Int. Cl.: A23F 3/42, A23F 3/40

(54) **IMPROVED PROCESS FOR TEA MANUFACTURE**
VERBESSERTES VERFAHREN FÜR DIE HERSTELLUNG VON TEE
PROCESSUS AMELIORE POUR LA FABRICATION DE THE

(30) Priority: 19.09.2005 IN MU11302005; 12.01.2006 EP 06250152
(43) Date of publication of application: 04.06.2008
(73) Proprietor: Unilever PLC, London EC4Y 0DY (GB); Unilever N.V., 3013 AL Rotterdam (NL)
(72) Inventor: BAGARIA, Hitesh, Ghanshyam, Tuscaloosa, Alabama 35401 (US); BALAKRISHNAN, Padma, Bangalore 560 016 (IN); COOPER, Michael, Alan, Bedford Bedfordshire MK44 1LQ (GB); GRIFFITHS, Allen, Bedford Bedfordshire MK44 1LQ (GB); NAIK, Vijay, Mukund, Whitefield P.o., Bangalore 560 066 (IN); PEILOW, Alan, David, Bedford Bedfordshire MK44 1LQ (GB); SHARP, David, George, Bedford Bedfordshire MK44 1LQ (GB); SINGH, Gurmeet, Whitefield P.o., Bangalore 560 066 (IN)
(74) Representative: Hugot, Alain
(86) International application number: PCT/EP2006/008164
(87) International publication number: WO 2007/039018

(56) References cited:
- WO-A-03/101215
- GB-A- 236 902
- GB-A- 1 097 661
- GB-A- 1 333 362
- US-A- 4 880 656
- PATENT ABSTRACTS OF JAPAN vol. 2003, no. 03, 5 May 2003 (2003-05-05) & JP 2002 330698 A (KOJIMA MAKOTO), 19 November 2002 (2002-11-19) cited in the application

## Description

### Technical Field of the Invention

The invention relates to a process for the manufacture of leaf tea products. The invention is particularly directed towards a process for recovery of tea aroma during the manufacture of tea without compromising the quality of the tea thereby produced.

### Background of the Invention

The manufacture of leaf tea products usually involves at least one drying step.

Green tea is generally prepared by heat treating (e.g. by steaming or pan-frying) freshly picked leaves to arrest enzyme action and then subjecting the leaves to a series of drying and rolling steps.

Black tea is generally prepared by subjecting freshly picked tea leaves to a series of processing conditions including withering and macerating the fresh tea leaves, followed by fermentation which mainly contributes to the characteristic colour, flavour and aroma of black tea. The tea is dried at high temperature after fermentation to arrest the enzyme action and to bring down the moisture to a low level.

Tea aroma is one of the most important factors for determining tea quality. The aroma profile of the final tea product is determined, to a large extent, by the processing conditions employed during manufacture. In particular, some aroma compounds are generated during heat-treatment steps, such as a drying step. Thus, when seeking to improve the aroma profile of heavily-processed tea products (such as "instant" tea powders and concentrates) it has been known to add aromas recovered from "made tea" (i.e. tea already having undergone a drying step). One such process is described in WO 2003/101215 (Goodricke, 2003), which discloses a method for the production of hot water soluble instant tea, comprising the steps of: (a) forming an extract by treating black tea leaves with hard warm water at a temperature in the range of 60 to 105°C, (b) stripping the extract of its aroma volatiles by passing the tea extract through a flash evaporator under partial vacuum, wherein the residence period is about 30 seconds to 360 seconds, (c) separating at least about 12% by wt. as insoluble tea solids from the extract by subjecting the extract to repeated clarification and polishing to obtain a clarified concentrate, (d) separating 6-10% soluble tea solids from the clarified concentrate, (e) adjusting the pH of the concentrate to neutral by adding an edible acid, (f) adding the aroma volatiles obtained in step (b) to the concentrate, and (g) obtaining a substantially moisture free tea powder capable of being reconstituted in hot water to produce instant tea, substantially free of cloudiness and haze.

Recovery of aroma from made tea is also disclosed in US 4,880,656 (SKW Troatberg Aktiengesellschaft) and GB 1 333 362. (HAG Aktiengesellschaft).

The present inventors have determined that the aroma lost during conventional drying of tea is almost twice the amount retained on the tea. Thus, we have recognised that the aroma lost during drying can be recovered without compromising the final tea quality. Furthermore, we have recognised that the aroma so-produced can be used to enhance the aroma of a tea product even though the aroma is recovered from fresh tea rather than made tea.

US patent 5,182,926 (Nestec S.A., 1993), discloses a process for the collection and recovery of aroma frost from gases evolved during the processing of a beverage such as coffee, tea or cocoa. The aroma gases may be those evolved at any one of several points in the processing of coffee, e.g. roasting of green coffee, grinding of roasted whole beans and those evolved during infusion. However, US 5,182,926 does not disclose the recovery of aroma from fresh tea leaves.

US patent 3,477,854 (Affico S.A., 1969) discloses a process for the production of tea extracts (i.e. instant tea) from fresh leaf. The fresh leaf may be comminuted and at least part of the aromatics stripped before extraction. However, US 3,477,854 does not disclose a process for the manufacture of a leaf tea product.

UK patent GB 1 097 661 (Marshall's Tea Machinery Company Ltd) discloses condensing at least part of the vapour given off during the firing of fermenting tea leaf in a tea dryer, separating at least part of the essential oils in the condensate from the remainder of the condensate, and introducing at least part of the separated essential oils into tea which has already been fired in the same, or another, tea dryer. However, GB 1 097 661 does not disclose drying tea in a low-convection dryer.

Japanese patent application JP 2002/330698 (Kojima Makoto) discloses leading exhaust gas discharged from a firing dryer through a heat exchanger to collect an aqueous solution containing flavour components. The components can be added to green tea beverages. Again, however, JP 2002/330698 does not disclose drying tea in a low-convection dryer.

It is thus an object of the invention to provide for an economical process for the recovery of tea aroma compounds during tea manufacture while ensuring that the leaf tea produced has all the qualities of traditional made tea.

Furthermore, we have found that use of fresh tea leaf as the source of aroma, combined with low-convection drying produces a unique aroma.

### Summary of the Invention

Thus, in a first aspect, the present invention provides a process for manufacturing a leaf tea product, the process comprising the steps of:
(a) providing fresh tea leaf;
(b) recovering aroma from the fresh tea leaf; and
(c) drying the fresh tea leaf to form the leaf tea product, wherein the aroma is recovered in step (b) whilst at least partially drying the fresh leaf in a low-convection dryer.

The present invention allows recovery of aroma that is currently lost during drying. The aroma so recovered may be added back to the leaf tea product to enhance or modify its flavour/aroma. Alternatively, the aroma may be used for the manufacture of instant and/or ready to drink tea products.

The use of fresh tea rather than made tea provides a unique aroma profile, as the fresh tea has not been subjected to the firing required for producing made tea in which aroma is both lost and chemically altered.

The aroma is recovered by at least partially drying the fresh leaf in a low-convection dryer. We have found that it is possible to collect and concentrate the aroma in a simple and economical manner when tea is dried in low-convection dryers. This is because the aroma is not diluted by the large amount of gas required in conventional dryers. Furthermore, low-convection drying (especially when carried out under vacuum) typically involves lower temperatures than conventional dryers and so the aroma is not chemically altered by the drying process. Also, use of low convection driers avoids the necessity to use expensive, hazardous and/or environmentally harmful agents such as carbon dioxide and/or the use of cryogenic processes.

In a particularly preferred embodiment, the process may be said to be a process for recovery of aroma during the manufacture of black tea comprising:
i. drying fermented mass obtained from tea leaves wherein at least a part of the drying is done in a low- convection dryer wherein the amount of inlet non-condensable gas into said low-convection dryer is less than 5 kg of said gas per kg of water evaporated; and
ii. cooling the exhaust gases from said low-convection dryer to prepare a condensate rich in aroma.

### Detailed Description of the invention

### Tea

"Tea" for the purposes of the present invention means material from *Camellia sinensis* var. *sinensis* or *Camellia sinensis* var. *assamica.* It also includes rooibos tea obtained from *Aspalathus linearis.* "Tea" is also intended to include the product of blending two or more of any of these materials.

"Tea leaf" for the purposes of this invention means a tea product that contains one or more tea origins in an uninfused form.

"Fresh tea leaf" refers to tea leaf that has never been dried to a water content of less than 30% by weight, and usually has a water content in the range 35 to 90%.

"Leaf tea product" refers to tea leaf that has been dried to a moisture content of less than 30% by weight, and usually has a water content in the range 1 to 10% by weight (i.e. "made tea"). The leaf tea product of this invention is a beverage precursor that is in a form suitable for directly preparing a beverage, e.g. by contacting the leaf tea product with an aqueous medium such as boiling water. The leaf tea products of this invention are preferably packaged. The leaf tea products may be packaged in an infusion package (e.g. tea bag) and/or an air tight envelope such as a foil bag. It is preferred that the leaf tea product is not decaffeinated.

The leaf tea product of this invention may comprise fermented tea (i.e. black tea), semi-fermented tea (i.e. oolong tea) and/or substantially unfermented tea (i.e. green tea). "Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

By "ready-to-drink tea" is meant a beverage comprising tea solids. Ready-to-drink tea usually has a water content of at least 80%, optimally between 85 and 99.9% by weight. Ready-to-drink tea may be packaged in an air tight container such as a can or bottle. The tea solids content of ready-to-drink tea is typically in the range of 0.001 to 5% by weight, preferably 0.01 to 3% by weight and most preferably 0.1 to 1% by weight.

### Process for Manufacturing a Leaf Tea Product

The process for manufacturing a leaf tea product comprises the steps of:
(a) providing fresh tea leaf;
(b) recovering aroma from the fresh tea leaf; and
(c) drying the fresh tea leaf to form the leaf tea product.

### Providing fresh tea leaf

In its simplest form, the fresh tea leaf is provided in freshly plucked form, i.e. without any further processing. The fresh tea leaf preferably comprises leaf and stem material. Most preferably the fresh tea leaf comprises actively growing buds, e.g. in the form of the first two or three leaves together with the unopened bud (so-called "two-and-a-bud" and/or "three-and-a-bud" material).

The fresh tea leaf may be withered prior to step (b). The tea leaves are typically withered for about 12 to 36 hours. Withering allows certain chemical and biochemical changes to occur and also reduces the moisture content of the leaves to around 35 to 70%.

The biochemical and/or chemical changes taking place during withering may increase the yield of the volatile flavour compounds in tea.

The fresh tea leaf may additionally or alternatively be macerated prior to step (b). Maceration involves wounding the leaves e.g. by rolling and/or crushing the leaves i.e. to breakdown the plant tissue structure. In black tea manufacture this has the effect of liberating fermentable substrates and fermenting enzymes from within the plant cells and tissue. The maceration is preferably achieved by passing the fresh tea leaves through a cutting machine. Thus for the purpose of the invention the fresh tea leaves may be macerated by a maceration process using a CTC, rotorvane, ball mill or a grinder or a hammer mill or a Lawri tea processor or a Legg cutting machine or rolled using tea rollers as in orthodox tea processing. Combinations of these maceration processes may also be used.

In the case of black and oolong tea, the process comprises the additional step of at least partially fermenting the fresh leaf. This fermentation may be performed prior to step (b) to allow the characteristic aroma compounds of fermented tea to be recovered in step (b). The tea may additionally or alternatively be fermented after step (b).

In the case of green tea, fermentation is usually prevented by treating the fresh tea leaf (e.g. with heat) prior to step (b) in order to deactivate the endogenous fermentation enzymes. Traditionally such treatment is achieved by steaming and/or pan frying the leaves.

### Aroma recovery

The aroma is recovered while at least partially drying the fresh tea leaf.

A low-convection dryer is used to recover the aroma. As used herein the term "low-convection dryer" refers to those types of dryers in which the amount of inlet non-condensable gas is less than 20 kg per kg of water evaporated, preferably less than 5 kg per kg of water evaporated, more preferably less than 1.0 kg per kg of water evaporated, more preferably still less than 0.5 kg per kg of water evaporated, and most preferably between 0.001 and 0.05 kg per kg of water evaporated. The term "non-condensable gas" refers to those substances with a boiling point of less than -10°C, more preferably less than -20°C and most preferably less than -35°C at atmospheric pressure. The non-condensable gas is usually air.

The various types of dryers which are suitable for the process of the invention include but are not limited to one or more of batch & continuous models of dryers such as vacuum dryers, rotary vacuum dryers, vacuum plate dryer, superheated steam dryers, hollow flight evaporators or jacketed screw evaporators. In most of these types of dryers, the heat is transferred by conduction from the surface of the dryers. It is preferred that the heat transfer surface temperature of the low-convection dryers is in the range of 40 to 150°C, more preferably in the range of 90 to 140°C. When dried in the low-convection dryer, it is desirable that the fresh tea leaf is not heated to a temperature higher than 70°C and is preferably heated to a temperature in the range of 30 to 55°C.

The drying in the low-convection dryer is preferably carried out under vacuum. The preferred ranges of vacuum are such that the pressure is less than 0.3 atmospheres absolute, more preferably in the range of 0.01 to 0.15 atmospheres absolute, most preferably in the range 0.05 to 0.15 atmospheres absolute.

The time over which the aroma is recovered from fresh leaf tea (e.g. by drying in one or more low-convection dryers) is typically less than eight hours, more preferably less than five hours, further more preferably in the range of 5 minutes to 5 hours. The time taken for aroma recovery is dependent on the type and size of dryer employed. When a batch type of dryer is used, the aroma recovery time is preferably in the range of 1 to 5 hours. When a continuous drying unit is used, sufficient aroma could be recovered in 5 to 30 minutes of residence time of the tea in the dryer or dryers.

The aroma is preferably recovered as a condensate. For example, the exhaust gases from the dryer are directed to a condenser and the aroma compounds along with the water are condensed using a condenser temperature of less than 50°C, preferably less than 35°C, further more preferably in the range of -5°C to 30°C.

The condensate obtained may be concentrated by any one of the known processes. For example, the aroma may be concentrated by reverse osmosis, distillation, cryoconcentration, freeze drying, and/or staged/partial condensation to prepare a tea aroma concentrate. It is particularly preferred to use the process of distillation for the concentration. The tea aroma is preferably concentrated to an aroma content of at least 25 mg/l, more preferably at least 1000 mg/l, more preferably still at least 5000 mg/l, and most preferably to an aroma content in the range of 10,000 mg/l to a concentrate that is purely aroma oil (e.g. 900 g/l).

Alternatively the condensate may be adsorbed on to one or more adsorbents selected from activated charcoal, resins, zeolites, and tea (e.g. black tea). The adsorbent may be packed in a column or fluidised bed and later desorbed to release the aroma components using thermal treatment, organic solvents or super critical CO₂. When the exhaust gases are adsorbed on to tea itself, further desorption is not necessary.

### Drying

The process of the invention includes the step of drying the fresh tea leaf to form the leaf tea product.

In the case of black and oolong tea, the drying step will usually involve firing. The firing involves heating and drying the fermented tea to destroy the fermenting enzymes and thereby arrest fermentation.

The drying step of this invention should be such as to result in "complete drying". By "complete drying" is meant a reduction of moisture content of the tea to below 30%, more preferably between 1 and 10% and optimally to a moisture content of about 5% by weight. The drying may also lead to further chemical oxidation of tea and changes in tea aroma.

Drying conventionally involves exposing the tea to a blast of hot, dry air in a high-convection dryer. A large part of the aroma that is generated during this process step is lost in the exhaust gases while the tea is dried at about 120°C in such high-convection dryers. Furthermore, even if the aroma was collected from such a high-convection dryer, the large volumes of gas employed would result in a very dilute aroma, requiring excessive concentration. Also, the high temperatures involved would chemically alter the aroma, e.g. owing to the production of Maillard compounds.

Thus according to the present invention, the drying step (c) is at least partially achieved during step (b) by at least partially drying the fresh tea leaf in a low-convection dryer. In fact, it is possible, as per the invention to completely dry the fresh tea leaf whilst recovering aroma. For example, the fresh tea leaf (e.g. in the form of a fermented mass) may be completely dried in a low-convection dryer. Alternately the fresh tea leaf could be partially dried first whilst recovering aroma (e.g. in a low-convection dryer) and then completely dried in a conventional dryer. Another possible alternative could be that the fresh tea leaf is first partially dried in a conventional dryer and then completely dried in a low-convection dryer. One could also envisage more than one such possible switchovers. Without wishing to be bound by theory, it is believed that recovering aroma at higher moisture contents produces an aroma with more of the "green notes" while recovering aroma at lower moisture contents produces more of the "black tea notes". Thus depending on the type of aroma compounds desired to be captured, the aroma recovery could be carried out over a selected moisture content range.

By "conventional dryers" is meant those dryers utilising a large amount of air flow, i.e greater than 5 kg of air per kg of water evaporated, typically greater than 20 kg of air per kg of water evaporated. Fluid bed dryers, and tray dryers, either batch or continuous are two such types of conventional dryers. Drying in a fluid bed dryer is usually carried out at an air inlet temperature in the range of 90-140°C, an outlet air temperature of less than 90°C and a bed temperature in the range of 45 to 90°C.

### Tea Product with Enhanced Aroma

The invention also provides for a tea product with enhanced aroma comprising added aroma as recovered in step (b) of the process of the invention. Preferably the aroma is in the form of a concentrate. The tea product is a leaf tea product or a ready-to-drink tea. The leaf tea product may be black, green or oolong tea. The aroma concentrate is preferably added at less than 10% with respect to weight of leaf tea product. When the tea aroma concentrate is added to ready-to-drink tea, it may be added at up to 500% by weight of tea solids present in ready to drink tea. It is preferred that the amount of added aroma in the ready to drink tea is such as to provide at least 10 ppm TOC (i.e. 10 mg of total organic carbon per litre of beverage), more preferably the amount of added aroma is in the range 50 to 2000 ppm, more preferably still in the range 75 to 750 ppm, and most preferably in the range 100 to 500 ppm.

It is preferred that the tea product is not decaffeinated.

### Examples

### Example 1

This example details analysis of the tea aroma condensate produced by a process according to the invention.

Tea leaves from Daverashola (in South India) were processed by the conventional steps of withering, maceration and fermentation and then dried from a moisture of 71.6% to 5% in a rotary vacuum dryer (RVD) where the ratio of amount of inlet air to amount of moisture evaporated was about 0.05 kg /kg. The aroma condensate was collected using a condensor operated at 5°C.

The aroma condensate was analysed by head space gas chromatography (HSGC) for which the procedure is given below.

HSGC conditions:
The volatile organic compounds were analysed used a Perkin-Elmer^{™} XL gas chromatograph (GC) and head space Turbomatrix^{™} 40.
The head space was maintained at 95°C for a cycle time of 50 minutes. The gas from the head space was injected into the GC equipped with a CP-Sil^{™} 8 CB analytical column from Varian.
Helium gas at a pressure of 17 psi (1.2 bar) was used and the molecules were detected using an FID detector at 220°C.

The data indicated that the condensate contained compounds which were strong indicators of the desired aroma of tea. The following three main groups of tea aroma compounds were observed:
(1) Fatty acid degradation products: 1-penten-3-ol, hexanal, cis-3-hexenol, trans-2-hexenal, heptanal, octanal, cis-3-pentenol;
(2) Terpenes: linalool, geraniol, nerol, linalool oxides; and
(3) Aromatics: phenylacetaldehyde, benzaldehyde, benzyl alcohol, 2-phenylethanol, and methyl salicylate.

### Example 2

This example demonstrates the high quality of black tea produced by a process according to the invention.

Two trials were conducted using a process according to the invention (samples 1 and 2). Tea leaves were withered, macerated, fermented and then dried in a 500 litre rotary vacuum dryer (RVD) where the ratio of amount of inlet air to amount of moisture evaporated was less than 0.05 kg of air per kg of moisture evaporated. The RVD was operated at a heat transfer surface temperature of 110°C, and under vacuum i.e. a pressure of 0.15 atmosphere absolute. The tea was dried from an initial moisture content of 70% to a moisture content of 50% after which the tea was dried in a conventional dryer (fluid bed dryer where the ratio of amount of inlet air to amount of moisture evaporated wars 40 kg of air per kg of moisture evaporated) to a final moisture content of 5 wt%.

Two trials were conducted using a conventional process (samples A and B). Tea leaves were withered, macerated, fermented and then dried in a fluid bed dryer where the ratio of amount of inlet air to amount of moisture evaporated was 40 kg of air per kg of moisture evaporated. The tea was dried from an initial moisture content of 70 wt% to a final moisture content of 5 wt%. The air inlet temperature was maintained at 120°C and the air outlet temperature ranged from 80 to 90°C.

The hot water infusions of black tea produced from samples 1 and 2 and comparative samples A and B were evaluated by tea tasters for liquor quality (Q), liquor brightness (B), liquor colour (C) and liquor mouthfeel (M) on a scale of 1 to 10 and the average reading is summarized in Table 1, with the higher value being more preferred.

**TABLE 1**

| Sample | Q | B | C | M |
|---|---|---|---|---|
| 1 | 4.2 | 5.0 | 5.4 | 4.4 |
| 2 | 4.2 | 5.0 | 5.4 | 4.4 |
| A | 4.0 | 4.8 | 4.8 | 4.2 |
| B | 4.0 | 5.0 | 5.0 | 4.2 |

The data in Table 1 indicates that tea produced by the process of the invention is of comparable quality to that produced by a conventional process. Sample 1 and sample A were analysed for volatile organic compounds using a Head-Space Gas Chromatograph (HSGC). The data indicated that the aroma content of the black tea produced by the process of the invention is comparable to that produced by a conventional process.

### Example 3

This example demonstrates the use of added aroma to enhance the aroma of tea.

Tea aroma was captured in the RVD during production of samples 1 and 2 in Example 2, using a condensor operated at a cooling temperature of 20 to 30°C. About 35 kg of tea aroma was captured from a 90 kg tea batch. In addition, the total organic carbon (TOC) of the tea aroma condensate which is an indicator of the strength of the aroma, was measured using a CO₂ analyser and a platinum electrode was used to oxidise all the carbon compounds to carbon dioxide. The average value of TOC was found to be about 300 mg/L of tea aroma condensate.

Experiments were conducted on addition of the tea aroma condensate prepared using the process of the invention to black tea by comparison of the resulting product with control samples. 45 panelists were given two cups of tea each. One cup contained tea infusion prepared from black tea. The second cup contained tea infusion prepared from identical black tea and to which infusion, 2 ml of tea aroma condensate was added. The panelists were asked to rate the cups of tea for aroma on a 7 point scale. The scores were summarised and averaged. It was found that the tea to which tea aroma condensate was added scored significantly higher with a score of 4.64 as against a score of 3.62 for black tea alone.

### Example 4

This example demonstrates the effect of various process parameters on the recovery of aroma in a process according to the invention.

A 90 kg batch of tea dhool with a water content of 66% by weight, after having undergone 140 minutes of fermentation was dried in a rotary vacuum dryer using a vacuum at 500 mmHg (0.65 atm) and a surface temperature of 120°C for 91 minutes. The dhool was dried to a moisture content of 45%. The condensate was collected in 5 litre batches ("cuts") and the rate of production of aroma condensate during the drying is summarised in Table 2 below.

**TABLE 2**

| Volume of condensate (litres) | Drying time (mins) |
|---|---|
| 5 | 15 |
| 10 | 25 |
| 15 | 38 |
| 20 | 47 |
| 25 | 60 |
| 35 | 91 |

The total organic carbon content was measured over each of the cuts and ranged from about 680 mg/litre to about 90 mg/litre with an average of about 260 mg/litre.

The various cuts were analysed for the presence of individual aroma compounds using HSGC, as described in Example 1 and using Solid-Phase Micro-Extraction (SPME) Head space gas chromatography. The HSGC is used to measure the aroma compounds that are produced in abundant quantities while SPME-HSGC is used to measure less abundant compounds which are nonetheless significant due to their odour potent nature.

### SPME- HSGC Conditions:

In this method, volatile compounds in a sample are allowed to equilibrate with the headspace in a sealed vial and are subsequently extracted via absorption onto a polymer coated fused silica fibre. The analytes are thermally desorbed from the fibre through direct exposure to a heated GC injection port.

The sample was incubated at 65°C for 5 minutes before the headspace was sampled for 20 minutes using the SPME fibre. This was carried out using a CombiPal^{™} autosampler fitted to an Agilent^{™} 6890 Gas Chromatograph. The GC was fitted with a CP-Wax^{™} 52 CB or an equivalent BP-20 Carbowax^{™} analytical column with helium as the carrier gas. The compounds were detected using an FID detection system at 260°C.

The data form the HSGC and SPME HSGC analyses of the samples from Example 4 indicated the presence of the following compounds: hexanal, trans-2-hexenal, 1-penten-3-ol, Z-2-penten-1-ol, hexan-1-ol, Z-3-hexen-1-ol, linalool, acetaldehyde, 2-methyl propanal, 2-methyl butanal, 3-methyl butanal, linalool oxide (trans), phenylacetaldehyde, and methyl salicylate. These compounds all contribute significantly to the unique aroma of tea.

## Claims

1. A process for manufacturing a leaf tea product, the process comprising the steps of:
(a) providing fresh tea leaf;
(b) recovering aroma from the fresh tea leaf; and
(c) drying the fresh tea leaf to form the leaf tea product, **characterised in that** the aroma is recovered in step (b) whilst at least partially drying the fresh leaf in a low-convection dryer.

2. A process according to claim 1 wherein the low-convection dryer is a vacuum dryer, a rotary vacuum dryer, a batch or continuous vacuum plate dryer, or a superheated steam dryer.

3. A process according to claim 1 or claim 2 wherein the amount of inlet non-condensable gas into said low-convection dryer is less than 5 kg of said gas per kg of water evaporated.

4. A process according to claim 3 wherein said non-condensable gas is air.

5. A process according to any one of the preceding claims wherein the exhaust gases from said low-convection dryer are cooled to prepare a condensate rich in the aroma.

6. A process according to any one of the preceding claims wherein the temperature of the tea in the low-convection dryer is less than 70°C.

7. A process according to any one of the preceding claims wherein the at least partial drying in step (b) is carried out under vacuum.

8. A process according to claim 7 wherein said vacuum corresponds to a pressure of 0.01 to 0.15 atmospheres absolute.

9. A process according to any one of the preceding claims wherein the exhaust gases from the low-convection dryer are cooled at a condensor temperature of -5°C to +35°C.

10. A process according to any one of the preceding claims wherein the aroma is recovered as a condensate.

11. A process according to claim 10 wherein the condensate is concentrated to prepare an aroma concentrate.

12. A process according to claim 11 wherein the aroma concentrate has an aroma content in the range of 5000 mg/l to 900 g/l.

13. A process according to any one of the preceding claims wherein the fresh tea leaf is withered prior to step (b).

14. A process according to any one of the preceding claims wherein the fresh tea leaf is macerated prior to step (b).

15. A process according to any one of the preceding claims wherein the fresh tea leaf is treated in order to deactivate enzymes in the fresh leaf thereby to prevent fermentation.

16. A process according to claim 15 wherein the tea product is green tea.

17. A process according to any one of claims 1 to 14 wherein the process comprises the additional step of at least partially fermenting the fresh tea leaf.

18. A process according to claim 17 wherein the at least partial fermentation is performed before step (b).

19. A process according to claim 18 wherein, after step (b), the process comprises the additional step of further fermenting the fresh tea leaf.

20. A process according to any one of claims 17 to 19 wherein the tea product is black tea.

21. A process according to any one of the preceding claims wherein the process comprises the additional step of combining at least part of the aroma recovered in step (b) with the leaf tea product produced by the drying step (c).

22. A process according to any one of the preceding claims wherein the process comprises the additional step of packaging the leaf tea product.

23. A process according to claim 22 wherein the leaf tea product is packaged in an infusion package.

## Patentansprüche

1. Verfahren zur Herstellung eines Blattteeprodukts, wobei das Verfahren die Schritte:
(a) Bereitstellung von frischen Teeblättern;
(b) Gewinnung von Aroma aus den frischen Teeblättern und
(c) Trocknung der frischen Teeblätter unter Bildung des Blattteeprodukts umfasst,
**dadurch gekennzeichnet, dass** das Aroma in Schritt (b) während einer wenigstens teilweisen Trocknung der frischen Blätter in einem Trockner mit geringer Konvektion gewonnen wird.

2. Verfahren nach Anspruch 1, wobei der Trockner mit geringer Konvektion ein Vakuumtrockner, ein Vakuumdrehtrockner, ein Vakuumplattentrockner des Chargentyps oder des kontinuierlichen Typs oder ein Trockner mit überhitztem Dampf ist.

3. Verfahren nach Anspruch 1 oder Anspruch 2, wobei die Menge an nicht-kondensierbarem in den Trockner mit geringer Konvektion eingeführtem Gas weniger als 5 kg des Gases pro kg verdampftes Wasser ist.

4. Verfahren nach Anspruch 3, wobei das nicht-kondensierbare Gas Luft ist.

5. Verfahren nach einem der vorangehenden Ansprüche, wobei die Abgase aus dem Trockner mit geringer Konvektion gekühlt werden, um ein Kondensat, das reich an Aroma ist, herzustellen.

6. Verfahren nach einem der vorangehenden Ansprüche, wobei die Temperatur des Tees in dem Trockner mit geringer Konvektion niedriger als 70 °C ist.

7. Verfahren nach einem der vorangehenden Ansprüche, wobei die wenigstens teilweise Trocknung in Schritt (b) unter Vakuum durchgeführt wird.

8. Verfahren nach Anspruch 7, wobei das Vakuum einem Druck von 0,01 bis 0,15 Atmosphären absolut entspricht.

9. Verfahren nach einem der vorangehenden Ansprüche, wobei die Abgase aus dem Trockner mit geringer Konvektion bei einer Kühlertemperatur von -5 °C bis +35 °C gekühlt werden.

10. Verfahren nach einem der vorangehenden Ansprüche, wobei das Aroma als ein Kondensat gewonnen wird.

11. Verfahren nach Anspruch 10, wobei das Kondensat unter Herstellung eines Aromakonzentrats konzentriert wird.

12. Verfahren nach Anspruch 11, wobei das Aromakonzentrat einen Aromagehalt im Bereich von 5000 mg/l bis 900 g/l hat.

13. Verfahren nach einem der vorangehenden Ansprüche, wobei die frischen Teeblätter vor Schritt (b) gewelkt werden.

14. Verfahren nach einem der vorangehenden Ansprüche, wobei die frischen Teeblätter vor Schritt (b) mazeriert werden.

15. Verfahren nach einem der vorangehenden Ansprüche, wobei die frischen Teeblätter behandelt werden, um Enzyme in den frischen Blättern zu desaktivieren, um **dadurch** eine Fermentation zu verhindern.

16. Verfahren nach Anspruch 15, wobei das Teeprodukt grüner Tee ist.

17. Verfahren nach einem der Ansprüche 1 bis 14, wobei das Verfahren den zusätzlichen Schritt eines wenigstens partiellen Fermentierens der frischen Teeblätter umfasst.

18. Verfahren nach Anspruch 17, wobei die wenigstens partielle Fermentation vor Schritt (b) durchgeführt wird.

19. Verfahren nach Anspruch 18, wobei nach Schritt (b) das Verfahren den zusätzlichen Schritt eines weiteren Fermentierens der frischen Teeblätter umfasst.

20. Verfahren nach einem der Ansprüche 17 bis 19, wobei das Teeprodukt schwarzer Tee ist.

21. Verfahren nach einem der vorangehenden Ansprüche, wobei das Verfahren den zusätzlichen Schritt eines Kombinierens wenigstens eines Teils des in Schritt (b) gewonnenen Aromas mit dem Blattteeprodukt, das durch den Trocknungsschritt (c) produziert wurde, umfasst.

22. Verfahren nach einem der vorangehenden Ansprüche, wobei das Verfahren den zusätzlichen Schritt des Verpackens des Blattteeprodukts umfasst.

23. Verfahren nach Anspruch 22, wobei das Blatt-Teeprodukt in einer Aufgießverpackung verpackt wird.

## Revendications

1. Procédé pour fabriquer un produit de thé en feuilles, le procédé comprenant les étapes consistant à :
(a) fournir des feuilles de thé fraîches ;
(b) récupérer l'arôme des feuilles de thé fraîches ; et
(c) faire sécher les feuilles de thé fraîches pour former le produit de thé en feuilles,
**caractérisé en ce que** l'arôme est récupéré à l'étape (b) tout en séchant au moins partiellement les feuilles fraîches dans un séchoir à faible convection.

2. Procédé selon la revendication 1, dans lequel le séchoir à faible convection est un séchoir sous vide, un séchoir rotatif sous vide, un séchoir à plaque sous vide discontinu ou continu, ou un séchoir à vapeur surchauffée.

3. Procédé selon la revendication 1 ou la revendication 2, dans lequel la quantité de gaz non condensable d'entrée dans ledit séchoir à faible convection est inférieure à 5 kg dudit gaz par kilo d'eau évaporée.

4. Procédé selon la revendication 3, dans lequel ledit gaz non condensable est de l'air.

5. Procédé selon l'une quelconque des revendications précédentes, dans lequel les gaz d'échappement dudit séchoir à faible convection sont refroidis pour préparer un condensat riche en arôme.

6. Procédé selon l'une quelconque des revendications précédentes, dans lequel la température du thé dans le séchoir à faible convection est inférieure à 70°C.

7. Procédé selon l'une quelconque des revendications précédentes, dans lequel le séchage au moins partiel à l'étape (b) est réalisé sous vide.

8. Procédé selon la revendication 7, dans lequel ledit vide correspond à une pression de 0,01 à 0,15 atmosphères absolues.

9. Procédé selon l'une quelconque des revendications précédentes, dans lequel les gaz d'échappement provenant du séchoir à faible convection sont refroidis à une température de condenseur de -5°C à +35°C.

10. Procédé selon l'une quelconque des revendications, dans lequel l'arôme est récupéré sous forme de condensat.

11. Procédé selon la revendication 10, dans lequel le condensat est concentré pour préparer un concentré aromatique.

12. Procédé selon la revendication 11, dans lequel le concentré aromatique a une teneur aromatique de l'ordre de 5 000 mg/l à 900 g/l.

13. Procédé selon l'une quelconque des revendications précédentes, dans lequel les feuilles de thé fraîches sont flétries avant l'étape (b).

14. Procédé selon l'une quelconque des revendications précédentes, dans lequel les feuilles de thé fraîches sont macérées avant l'étape (b).

15. Procédé selon l'une quelconque des revendications précédentes, dans lequel les feuilles de thé fraîches sont traitées afin de désactiver les enzymes dans les feuilles fraîches pour empêcher ainsi la fermentation.

16. Procédé selon la revendication 15, dans lequel le produit de thé est du thé vert.

17. Procédé selon l'une quelconque des revendications 1 à 14, dans lequel le procédé comprend l'étape supplémentaire consistant à fermenter au moins partiellement les feuilles de thé fraîches.

18. Procédé selon la revendication 17, dans lequel la fermentation au moins partielle est réalisée avant l'étape (b).

19. Procédé selon la revendication 18, dans lequel, après l'étape (b), le procédé comprend l'étape supplémentaire consistant à continuer à faire fermenter les feuilles de thé fraîches.

20. Procédé selon l'une quelconque des revendications 17 à 19, dans lequel le produit de thé est du thé noir.

21. Procédé selon l'une quelconque des revendications précédentes, dans lequel le procédé comprend l'étape supplémentaire consistant à combiner au moins une partie de l'arôme récupéré à l'étape (b) avec le produit de thé en feuilles produit par l'étape de séchage (c).

22. Procédé selon l'une quelconque des revendications précédentes, dans lequel le procédé comprend l'étape supplémentaire consistant à emballer le produit de thé en feuilles.

23. Procédé selon la revendication 22, dans lequel le produit de thé en feuilles est emballé dans un sachet d'infusion.
